# EUROPÄISCHE PATENTSCHRIFT

(11) **EP 2 675 685 B1**
(45) Veröffentlichungstag und Bekanntmachung des Hinweises auf die Patenterteilung: **13.07.2016**
(21) Anmeldenummer: 12719928.9
(22) Anmeldetag: 10.02.2012
(51) Int. Cl.: B60W 40/068

(54) **REIBWERTSCHÄTZUNG MITTELS EINER 3D-KAMERA**
ESTIMATION OF COEFFICIENTS OF FRICTION USING A 3-D CAMERA
ESTIMATION DE VALEUR DE FROTTEMENT AU MOYEN D'UNE CAMÉRA 3D

(30) Priorität: 14.02.2011 DE 102011011182
(43) Veröffentlichungstag der Anmeldung: 25.12.2013
(73) Patentinhaber: Conti Temic Microelectronic GmbH, 90411 Nürnberg (DE)
(72) Erfinder: RANDLER, Martin, 88090 Immenstaad (DE); HEINRICH, Stefan, 77855 Achern (DE)
(86) Internationale Anmeldenummer: PCT/DE2012/100029
(87) Internationale Veröffentlichungsnummer: WO 2012/110030

(56) Entgegenhaltungen:
- EP-A1- 2 048 476
- EP-A2- 0 412 791
- US-A- 4 712 635
- US-A1- 2012 078 483

## Beschreibung

Die Erfindung betrifft ein Verfahren und eine Vorrichtung zur Reibwertschätzung mittels einer (räumlich auflösenden) 3D-Kamera.

Die DE 102009033219 A1 zeigt ein Verfahren und eine Vorrichtung zur Ermittlung eines einem Fahrzeug vorausliegenden Straßenprofils einer Fahrspur. Mittels einer Bilderfassungsvorrichtung bzw. aus Fahrzeugeigenbewegungsdaten wird ein Straßenhöhenprofil der dem Fahrzeug vorausliegenden Fahrspur ermittelt. Die Bilderfassungsvorrichtung kann hierbei eine Kamera sein, die im Frontbereich des Fahrzeugs fest angeordnet ist und zwei Bildaufnahmeeinheiten umfasst. In Abhängigkeit des ermittelten Straßenhöhenprofils kann eine aktive Fahrwerksregelung oder Verstelldämpfung geregelt werden.

Die Unfallvermeidung gewinnt bei Fahrerassistenzsystemen zunehmend an Bedeutung. Insbesondere Notbremssysteme leisten hierzu einen wichtigen Beitrag. Ihre Wirkung hängt jedoch entscheidend vom Reibwert bzw. Reibungskoeffizienten des Untergrundes in Bezug zum Reifen des Fahrzeugs ab. Insbesondere Nässe erniedrigt den Reibwert gegenüber dem auf einer trockenen Fahrbahn erheblich.

WO 2011/007015 A1 zeigt ein laserbasiertes Verfahren zur Reibwertklassifikation in Kraftfahrzeugen. Signale eines Lidar- bzw. CV-Sensors, die auf die Fahrbahnoberfläche gerichtet sind, werden hierzu ausgewertet und anschließend wird insbesondere anhand der Amplitude der vermessenen Fahrbahnoberfläche ein Reibwert zugeordnet. Es kann beispielsweise geschätzt werden, ob Schnee, Asphalt oder Eis die Fahrbahnoberfläche bilden.

Es zeigt sich, dass Verfahren zur Reibwertermittlung nach dem Stand der Technik Nachteile mit sich bringen, da zusätzliche Lidarsensoren teuer sind, der Lidarsensor im Fahrzeug gezielt auf die Fahrbahn gerichtet werden muss und der Reibwert der Fahrbahn nicht ausreichend weit im Voraus eigeschätzt werden kann.

Es ist Aufgabe der vorliegenden Erfindung diese Nachteile zu überwinden und eine günstigere, zuverlässigere und vorausschauende Reibwertschätzung zu ermöglichen.

Die Aufgabe wird gelöst, indem mit einer 3D-Kamera mindestens ein Bild von der Umgebung des Fahrzeugs aufgenommen wird. Aus den Bilddaten der 3D-Kamera wird im gesamten Fahrzeugvorfeld ein Höhenprofil der Straßenoberfläche vermessen bzw. erstellt. Aus dem Höhenprofil kann eine Aussage über den zu erwartenden Reibwert (der Straßenoberfläche im Fahrzeugvorfeld) getroffen werden. Optional können dazu spezielle 3D-Muster ausgewertet werden.

In einer vorteilhaften Ausführungsform werden aus dem Höhenprofil der Straßenoberfläche Wasserflächen als Spiegelungen auf der Straße erkannt. Spiegelungen aufgrund von einem Wasserfilm oder einer Pfütze können nämlich Bereichen zugeordnet werden, die im Höhenprofil tiefer liegen als die reale Straßenoberfläche. Dies ist im Höhenprofil gut erkennbar.

Bevorzugt wird aus dem Höhenprofil Schneebelag erkannt aufgrund der tieferliegenden Fahrspuren von Reifen vorausgefahrener Fahrzeuge. Zusätzlich werden Information aus 2D-Bilddaten, insbesondere eines Grauwertbildes, mindestens einer monokularen Kamera der 3D-Kamera berücksichtigt.

In einer bevorzugten Ausführungsform wird aus dem Höhenprofil Schotterbelag aufgrund eines stark ausgeprägten Rauschens in Querschnitten des Höhenprofils erkannt.

Vorteilhaft können zusätzlich zum Höhenprofil 2D-Bilddaten mindestens einer monokularen Kamera der 3D-Kamera insbesondere mittels Kantenerkennungsmethoden ausgewertet werden, um die aus dem Höhenprofil abgeleiteten Informationen zu stützen.

Die Erfindung betrifft ferner eine Vorrichtung zur Reibwertschätzung, die eine 3D-Kamera zur Aufnahme mindestens eines Bildes von der Umgebung des Fahrzeugs umfasst. Vorgesehen sind Auswertemittel zum Erstellen eines Höhenprofils der Straßenoberfläche im gesamten Fahrzeugvorfeld aus Bilddaten der 3D-Kamera und zum Schätzen des aus dem Höhenprofil zu erwartenden lokalen Reibwerts der Straßenoberfläche.

Die 3D-Kamera ist bevorzugt eine Stereokamera oder eine Photomischdetektor-Kamera bzw. PMD-Sensor.

Im Folgenden wird die Erfindung anhand eines Ausführungsbeispiels näher erläutert.

Eine Stereokamera nimmt mindestens ein Bild von der vor dem Fahrzeug liegenden Umgebung auf, aus dem anschließend ein Höhenprofil der Fahrbahn erstellt wird. Die Analyse dieses Höhenprofils ergibt beispielsweise, das zwei in Fahrtrichtung ausgedehnte Vertiefungen vorliegen, deren Ausdehnung in Querrichtung jeweils etwa einer Reifenbreite entspricht und die einen Querabstand von etwa einer Fahrzeugbreite, z.B. 1,5 Metern, aufweisen. Hieraus kann eine Klassifikation erfolgen, die als Untergrund eine Schneedecke oder eine unbefestigte Fahrbahnoberfläche (z.B. schlammiger Feldweg) nahelegt. Durch Analyse eines 2D-Kamerabildes einer Bildaufnahmeeinheit der Stereokamera kann ermittelt werden, ob die Fahrbahnoberfläche weiß ist oder dunkler erscheint. Im ersten Fall wird Schnee als Fahrbahnuntergrund ermittelt, ansonsten eine unbefestigte Fahrbahnoberfläche. Daraus kann der Reibwert für den jeweiligen Untergrund geschätzt werden, z.B. für Schnee µ_{H} < 0,2 und für einen Feldweg ca. 0,2 bis 0,3.

## Patentansprüche

1. Verfahren zur Reibwertschätzung mittels einer 3D-Kamera, wobei mit der 3D-Kamera mindestens ein Bild von der vor dem Fahrzeug liegenden Umgebung aufgenommen wird, **dadurch gekennzeichnet, dass** aus den Bilddaten der 3D-Kamera im gesamten Fahrzeugvorfeld ein Höhenprofil der Straßenoberfläche erstellt wird und aus dem Höhenprofil der zu erwartende lokale Reibwert der Straßenoberfläche im Fahrzeugvorfeld geschätzt wird.

2. Verfahren nach Anspruch 1, wobei aus dem Höhenprofil der Straßenoberfläche Wasserflächen als Spiegelungen auf der Straße erkannt werden, indem Spiegelungen Bereichen zugeordnet werden können, die im Höhenprofil tiefer liegen als die reale Straßenoberfläche.

3. Verfahren nach Anspruch 1 oder 2, wobei aus dem Höhenprofil Schneebelag erkannt wird aufgrund der tieferliegenden Fahrspuren von Reifen vorausgefahrener Fahrzeuge sowie unter zusätzlicher Berücksichtigung von Information aus 2D-Bilddaten, insbesondere eines Grauwertbildes, mindestens einer monokularen Kamera der 3D-Kamera.

4. Verfahren nach einem der vorhergehenden Ansprüche, wobei aus dem Höhenprofil Schotterbelag aufgrund eines stark ausgeprägten Rauschens in Querschnitten des Höhenprofils erkannt wird.

5. Verfahren nach einem der vorhergehenden Ansprüche, wobei zusätzlich 2D-Bilddaten mindestens einer monokularen Kamera der 3D-Kamera insbesondere mittels Kantenerkennungsmethoden ausgewertet werden, um die aus dem Höhenprofil abgeleiteten Informationen zu stützen.

6. Verfahren nach einem der vorhergehenden Ansprüche, wobei die 3D-Kamera eine Stereokamera ist.

7. Verfahren nach einem Ansprüche 1 bis 5, wobei die 3D-Kamera eine Photomischdetektor-Kamera ist.

8. Vorrichtung zur Reibwertschätzung umfassend eine 3D-Kamera zur Aufnahme mindestens eines Bildes von der vor dem Fahrzeug liegenden Umgebung, **dadurch gekennzeichnet, dass** Auswertemittel zum Erstellen eines Höhenprofils der Straßenoberfläche im gesamten Fahrzeugvorfeld aus Bilddaten der 3D-Kamera und zum Schätzen des aus dem Höhenprofil zu erwartenden lokalen Reibwerts der Straßenoberfläche vorgesehen sind.

9. Vorrichtung nach Anspruch 8, wobei die 3D-Kamera eine Stereokamera ist.

10. Vorrichtung nach Anspruch 8, wobei die 3D-Kamera eine Photomischdetektor-Kamera ist.

## Claims

1. A method for estimating the coefficient of friction by means of a 3D camera, wherein the 3D camera records at least one image of the surroundings in front of the vehicle, **characterised in that** the image data of the 3D camera is used to produce a height profile of the road surface in the entire space in front of the vehicle and the height profile is used to estimate the local coefficient of friction of the road surface that is to be expected in the space in front of the vehicle.

2. The method according to claim 1, wherein it is deduced from the height profile of the road surface that areas covered with water are present if there are reflections on the road, due to the fact that reflections can be categorised as areas which are lower than the real road surface in the height profile.

3. The method according to claim 1 or 2, wherein it is deduced from the height profile that a snow cover is present based on the fact that there are lower tracks made by the tyres of vehicles travelling in front and additionally taking into account information from 2D image data, in particular a grey scale image, of at least one monocular camera of the 3D camera.

4. The method according to any one of the preceding claims, wherein it is deduced from the height profile that a gravel cover is present based on a distinctive noise in cross-sections of the height profile.

5. The method according to any one of the preceding claims, wherein in addition 2D image data of at least one monocular camera of the 3D camera are evaluated, in particular by edge detection methods, to support the information derived from the height profile.

6. The method according to any one of the preceding claims, wherein the 3D camera is a stereo camera.

7. The method according to any one of claims 1 to 5, wherein the 3D camera is a photonic mixer device camera.

8. A device for estimating the coefficient of friction, comprising a 3D camera for recording at least one image of the surroundings in front of the vehicle, **characterised in that** evaluation means are provided for producing a height profile of the road surface in the whole space in front of the vehicle on the basis of image data of the 3D camera and for estimating the local coefficient of friction of the road surface that is to be expected from the height profile.

9. The device according to claim 8, wherein the 3D camera is a stereo camera.

10. The device according to claim 8, wherein the 3D camera is a photonic mixer device camera.

## Revendications

1. Procédé d'estimation de valeur de frottement au moyen d'une caméra 3D, au moins une image de l'environnement situé devant le véhicule étant prise avec la caméra 3D, **caractérisé en ce que**, à partir des données d'image de la caméra 3D, il est établi dans l'ensemble de la zone située devant le véhicule un profil de hauteur de la surface de la route et, à partir du profil de hauteur, la valeur de frottement locale à attendre de la surface de la route est estimée.

2. Procédé selon la revendication 1, des surfaces d'eau étant détectées en tant que réflexions sur la route à partir du profil de hauteur de la surface de la route par le fait que des réflexions peuvent être affectées à des zones qui sont plus basses dans le profil de hauteur que la surface de la route réelle.

3. Procédé selon la revendication 1 ou 2, une couche de neige étant reconnue à partir du profil de hauteur en raison des traces de roulement de pneus situées plus bas de véhicules qui précèdent ainsi qu'en prenant en compte à titre supplémentaire l'information provenant de données d'images 2D, en particulier d'une image à valeurs de gris, d'au moins une caméra monoculaire de la caméra 3D.

4. Procédé selon l'une des revendications précédentes, un lit de pierres concassées étant détecté à partir du profil de hauteur en raison d'un bruit fortement marqué dans des sections transversales du profil de hauteur.

5. Procédé selon l'une des revendications précédentes, des données d'images 2D d'au moins une caméra monoculaire de la caméra 3D étant à titre supplémentaire analysées en particulier au moyen de méthodes de détection de bord pour étayer les informations dérivées à partir du profil de hauteur.

6. Procédé selon l'une des revendications précédentes, la caméra 3D étant une caméra stéréo.

7. Procédé selon l'une des revendications 1 à 5, la caméra 3D étant une caméra Photonic Mixer Device.

8. Dispositif d'estimation de valeur de frottement, comprenant une caméra 3D pour la prise d'au moins une image de l'environnement situé devant le véhicule, **caractérisé en ce qu'**il est prévu des moyens d'analyse destinés à l'établissement d'un profil de hauteur de la surface de la route dans l'ensemble de la zone située devant le véhicule à partir de données d'images de la caméra 3D et à l'évaluation de la valeur de frottement locale à attendre de la surface de la route à partir du profil de hauteur.

9. Dispositif selon la revendication 8, la caméra 3D étant une caméra stéréo.

10. Dispositif selon la revendication 8, la caméra 3D étant une caméra Photonic Mixer Device.
